# EUROPEAN PATENT SPECIFICATION

(11) **EP 3 815 428 B1**
(45) Date of publication and mention of the grant of the patent: **07.05.2025**
(21) Application number: 20742697.4
(22) Date of filing: 16.07.2020
(51) Int. Cl.: H04W 48/12, H04W 76/27, H04W 88/08, H04W 92/12

(54) **SYSTEM INFORMATION DELIVERY ENHANCEMENTS**
VERBESSERTE SYSTEMINFORMATIONSBEREITSTELLUNG
AMÉLIORATIONS DE DISTRIBUTION D'INFORMATIONS DE SYSTÈME

(30) Priority: 14.08.2019 IN 201941032866
(43) Date of publication of application: 05.05.2021
(73) Proprietor: Nokia Solutions and Networks Oy, 02610 Espoo (FI)
(72) Inventor: ARJONA, Andres, Tokyo 153-0043 (JP); CHANDRASHEKAR, Subramanya, Bangalore 560079 (IN); KOZIOL, Dawid, 52-016 Wroclaw (PL)
(74) Representative: Page White Farrer
(86) International application number: PCT/EP2020/070085
(87) International publication number: WO 2021/028145

(56) References cited:
- WO-A1-2018/016922
- US-A1- 2018 338 277
- HUAWEI ET AL: "Corrections to System Information in 38.300", vol. RAN WG2, no. Gothenburg, Sweden; 20180820 - 20180824, 10 August 2018 (2018-08-10), XP051522027, Retrieved from the Internet <URL:http://www.3gpp.org/ftp/tsg%5Fran/WG2%5FRL2/TSGR2%5F103/Docs/R2%2D1812430%2Ezip> [retrieved on 20180810]
- SAMSUNG: "Essential System Information (SI) and on-demand SI", vol. RAN WG1, no. Reno, USA; 20161114 - 20161118, 13 November 2016 (2016-11-13), XP051176405, Retrieved from the Internet <URL:http://www.3gpp.org/ftp/Meetings_3GPP_SYNC/RAN1/Docs/> [retrieved on 20161113]
- SAMSUNG: "Contents of Minimum System Information", vol. RAN WG2, no. Gothenburg, Sweden; 20160822 - 20160826, 21 August 2016 (2016-08-21), XP051140933, Retrieved from the Internet <URL:http://www.3gpp.org/ftp/Meetings_3GPP_SYNC/RAN2/Docs/> [retrieved on 20160821]

## Description

### TECHNICAL FIELD

This disclosure concerns mechanisms for providing and broadcasting System Information (SI) in an environment where a gNB has been decomposed into a gNB-CU (Centralized Unit) and a gNB-DU (Distributed Unit).

### BACKGROUND

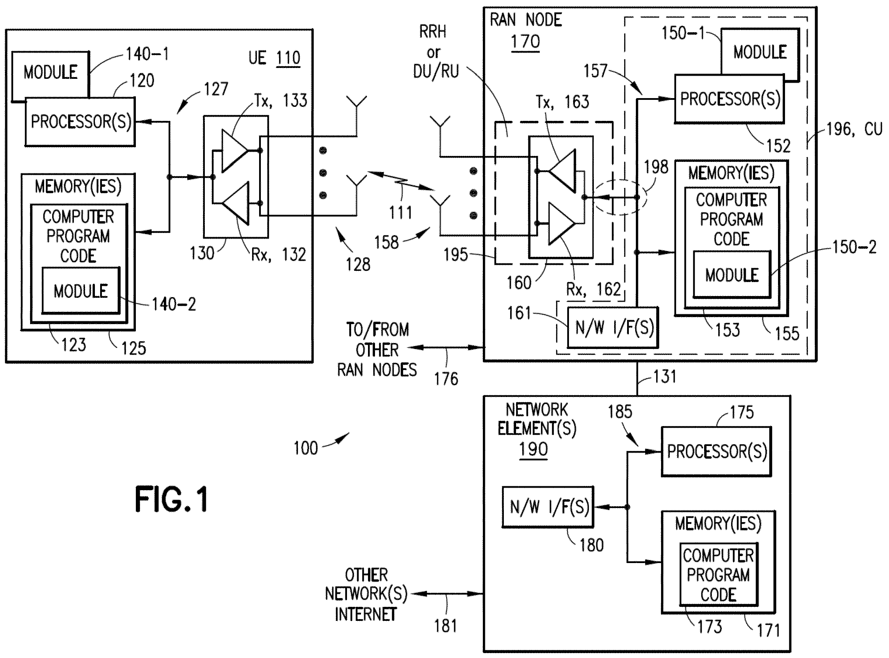

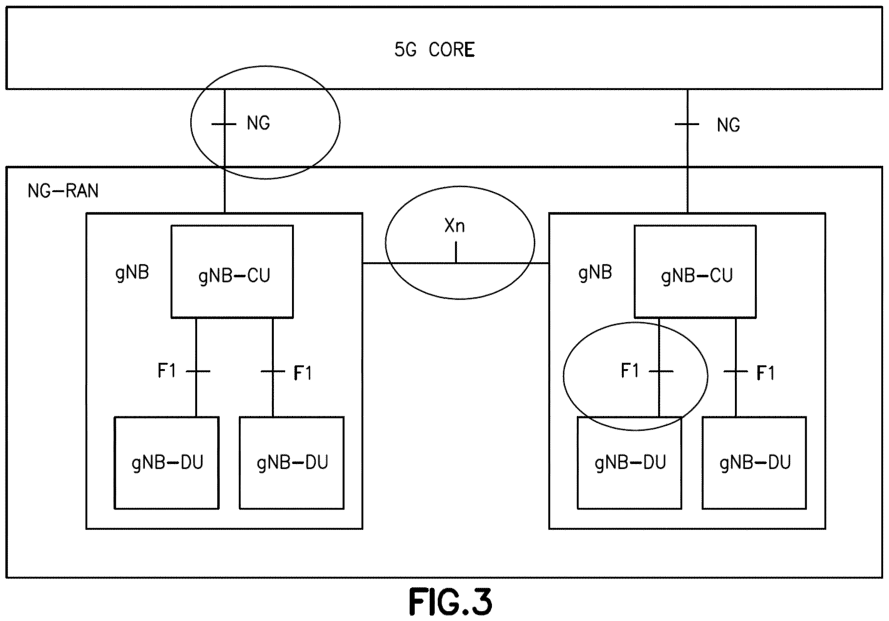

The 3^{rd} Generation Partnership Project (3GPP) supports gNB deployment in a disaggregated architecture which allows the gNB to be decomposed into a gNB-CU (Centralized Unit) and a gNB-DU (Distributed Unit), as will be shown in Figures 1 and 3 below. The disaggregated architecture impacts the mechanisms for providing and broadcasting System Information (SI), since some portions of SI are handled in the gNB-CU, while others are handled in the gNB-DU. In current specifications, the gNB-DU owns and encodes MIB and SIB1, while the gNB-CU owns and encodes all the other remaining System Information Broadcasts (SIBs). The present disclosure applies to the following:
Any scenario in which the gNB-DU is able to provide System Information that is originally intended to be triggered from the gNB-CU, such as SIB9, yet the gNB-DU is able to generate it autonomously and broadcast it without further assistance from the gNB-CU. This functionality can greatly reduce signaling over the interface as the gNB-CU is no longer required to provide continuous updates over the interface between the gNB-CU and the gNB-DU, which in some scenarios can be as frequent as every 160 ms, such as, in case of reference-time delivery in SIB9.

Any scenario in which the gNB-CU may benefit from receiving the gNB-DU-derived information and use it to deliver it to the user equipment (UE) via dedicated unicast signaling, such as, an encoded SIB, or another piece of information, such as time reference. The benefit of doing this is two-fold. Firstly, there is information that is more reliable/accurate if generated/retrieved at the gNB-DU, such as time-reference information. Thus, it is preferable to use the information the gNB-DU has generated rather than to have the gNB-CU generate it by itself. If the gNB-DU provides the SI in encoded form, that is, as an SIB, the gNB-CU can copy and paste it directly without further de-coding/re-encoding. Secondly, the information received, for example, time-reference information, may also be applicable to multiple UEs. Thus, a single information retrieval can suffice to apply it to multiple UEs. In this case, unencoded information is preferred. Depending on the scenario, the gNB-CU may also provide it directly to UEs, or encode it in the form of an SIB.

The present disclosure is applicable to disaggregated architecture both in 5G and LTE, that is, to the F1 and W1 interfaces defined by 3GPP. Although, in the present disclosure, the F1 scenario is used as the basis for discussion, the same solution is also applicable for W1.

There is a need for a solution that allows:
- The gNB-CU to provide more accurate/reliable System Information via dedicated signaling (unicast).
- Reducing, or even completely eliminating, wasteful and unnecessary signaling between the gNB-CU and the gNB-DU in broadcast (multicast) cases.

The issue of having SIB9 owned and encoded at the gNB-CU rather than at the gNB-DU has been under discussion. Implementing SIB9 delivery based on encoding on the gNB-CU is complex, given that the gNB-CU does not have accurate time information unless there is a very tight synchronization with the gNB-DU. Although it was proposed to change the existing System Information framework so that the gNB-DU would own and encode SIB9, this proposal has not been accepted because of concerns with backward compatibility and implementations with earlier versions of the specifications which would still have the gNB-CU encode SIB9. Instead, there was a compromise to have the gNB-CU still own and encode SIB9, yet allow the gNB-DU to re-encode it prior to broadcasting it.

As will be pointed out in the present disclosure, the capability of the gNB-DU to re-encode SIB9 still has multiple shortcomings and is not efficient in that excessive signaling is not resolved, and the gNB-CU still provides inaccurate information in dedicated signaling (unicast) cases. Further, it is not applicable on a general level to all other system information cases and instead only partially tackles the issue of SIB9. This is a major shortcoming, given that as part of new work items, there are new SIBs being considered which would also not work optimally under the current framework which has MIB/SIB1 owned and encoded at gNB-DU and all other SIBs owned and encoded at the gNB-CU. Such examples are, for instance, new SIBs being considered for Non-Public Networks (NPN), as well as unicast delivery of very accurate information, possibly via a new SIB, required for Industrial IoT (IIoT) in 3GPP Release 16 work items.

US2018/338277 relates to a method whereby a DU of a base station: receives system information from a CU of the base station; receives a request for system information from a UE; forwards the request to the CU; receives a command from the CU to provide the system information; and broadcasts the system information based on the command.

It should be understood, in the discussion to follow, that the term "gNB" should be understood to mean "network node". The term "gNB" is used to denote a network node in 5G. However, it should be understood that the present invention, as described below, is not limited to 5G, but may be applicable to other generations yet to be developed or to earlier generations being further developed. As a consequence, "gNB" should be understood more broadly as a network node.

### SUMMARY

The invention is defined in the claims. It will be understood that aspects of the disclosure falling within the scope of the claims are part of the invention.

### BRIEF DESCRIPTION OF THE DRAWINGS

The foregoing and other aspects of these teachings are made more evident in the following detailed description, when read in conjunction with the attached drawing figures.
Figure 1 shows a simplified block diagram of certain apparatus in which the subject matter of the present disclosure may be practiced.
Figures 2 and 3 show an example of New Radio (NR) architecture having the 5G core (5GC) and the NG-RAN.
Figure 4 illustrates an embodiment of the present disclosure with unicast delivery of SIB or time-reference information.
Figure 5 illustrates an F1 setup procedure.
Figure 6 illustrates a gNB-DU Configuration Update procedure.
Figure 7 illustrates a gNB-CU Configuration Update procedure.
Figure 8 illustrates a UE procedure for SI request support in an RRC CONNECTED state.
Figure 9 is a flow chart illustrating a method performed by a gNB-DU in accordance with the present disclosure.
Figure 10 is a flow chart illustrating a method performed by a gNB-CU in accordance with the present disclosure.

### DETAILED DESCRIPTION

Figure 1 is a block diagram of one possible and non-limiting example in which the subject matter of the present disclosure may be practiced. A user equipment (UE) 110, radio access network (RAN) node 170, and network element(s) 190 are illustrated. In the example of Figure 1, the user equipment (UE) 110 is in wireless communication with a wireless network 100. A UE is a wireless device, typically mobile, that can access the wireless network. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured, with the one or more processors 120, to cause the user equipment 110 to perform one or more of the operations as described herein. The UE 110 communicates with RAN node 170 via a wireless link 111.

The RAN node 170 in this example is a base station that provides access by wireless devices, such as the UE 110, to the wireless network 100. The RAN node 170 may be, for example, a base station for 5G, also called New Radio (NR). In 5G, the RAN node 170 may be an NG-RAN node, which is defined as either a gNB or an ng-eNB. A gNB is a node providing NR user plane and control-plane protocol terminations toward the UE, and connected via the NG interface to a 5GC, such as, for example, the network element(s) 190. The ng-eNB is a node providing E-UTRA user plane and control plane protocol terminations towards the UE, and connected via the NG interface to the 5GC. The NG-RAN node may include multiple gNBs, which may also include a centralized unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or ng-eNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, for example, as part of a RU, but some examples of this may have the transceiver 160 as part of a separate RU, for example, under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, module 150 may be implemented as module 150-2, which is implemented as computer program code 153 executed by the one or more processors 152. For instance, the one or more memories 155 and the computer program code 153 are configured, with the one or more processors 152, to cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a centralized unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360° area so that the single base station's coverage area covers an approximate oval or circle. Furthermore, each cell can correspond to a single carrier and a base station may use multiple carriers. So if there are three 120° cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(S)) and/or user plane functions (UPF(s)) and/or session management function(s) (SMF(s)). Such core network functionality for LTE may include MME (Mobility Management Entity)/SGW (Serving Gateway) functionality. These are merely exemplary functions that may be supported by the network element(s) 190, and note that both 5G and LTE functions might be supported. The RAN node 170 is coupled via a link 131 to a network element 190. The link 131 may be implemented as, for example, an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured, with the one or more processors 175, to cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer-readable memories 125, 155, and 171 may be of any type suitable to the local technical environment and may be implemented using any suitable data storage technology, such as semiconductor-based memory devices, flash memory, magnetic memory devices and systems, optical memory devices and systems, fixed memory and removable memory. The computer-readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

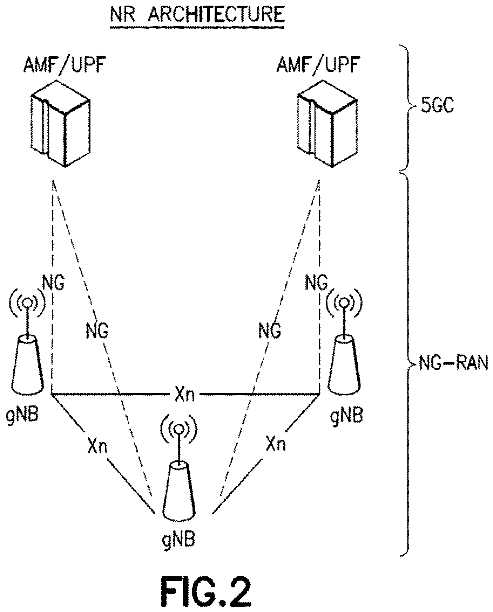

Figures 2 and 3 show an example of New Radio (NR) architecture having the 5G core (5GC) and the NG-RAN. The base stations gNB are coupled to the 5GC by the interface to Core NGs, and the gNBs are coupled to each other by the inter-base stations interface Xn.

Having thus introduced one suitable but non-limiting technical context for the practice of the example embodiments, the example embodiments will now be described with greater specificity. 3GPP TS 38.401 defines that System Information be distributed as follows:
- gNB-DU is responsible for encoding MIB and SIB1.
- gNB-CU is responsible for encoding all other System Information, that is, SIB2, SIB3, and so forth. Note that, when there is no particular discrimination between certain SIBs, the set as a whole is referred as "Other-SI" (OSI).
- gNB-DU may re-encode SIB9.

The SIBs can be delivered to UEs in the following ways:

### 1. Broadcast delivery (multicast)

Broadcast delivery is the default mechanism. The F1 Interface, defined in 3GPP TS 38.470 and 3GPP TS 38.473, supports exchanging their corresponding SIBs between the gNB-DU and the gNB-CU via both the F1 setup procedure as well as via DU configuration update and CU configuration update messages, respectively. Likewise, the gNB-CU can command the gNB-DU to broadcast SIBs belonging to Other-SI via the System Information delivery command message.

The frequency of broadcast is configurable. However, there is a possibility to have "always on" broadcast, meaning that the SIBs will continuously be broadcasted. If the SIB is owned/encoded by the gNB-CU and is part of the Other-SI, this will require the gNB-CU to provide the updated SIB as every time its contents change when it is to be transmitted by the gNB-DU. This will be necessary even if the gNB-DU is capable of re-encoding a certain SIBs, such as SIB9. Likewise, for some SIBs, such as SIB9, this can be as frequent as every 160ms.

The present disclosure tackles this issue by introducing a mechanism that has the gNB-DU indicate to the gNB-CU that it has capability of generating information related to Other-SI. With this information, the gNB-CU can opt out from continuously providing updates for the indicated SIBs, and send an acknowledge indication back to the gNB-DU. After this message exchange, the gNB-DU will autonomously generate the agreed SIBs without requiring any further communication with the gNB-CU. In addition, an option for the gNB-CU to enable/disable this function at the gNB-DU, if, for some reason, the gNB-CU is the preferable entity to generate the SIB, is proposed.

Changes required in the F1 interface are a new Information Elements (IE) to the F1 setup procedure, the DU configuration update procedure, and the CU configuration update procedure.

Additionally, 3GPP specifications allow for "on-demand" delivery of System Information. One of the methods is via Message 1 (Msg1). In this scenario, a UE can directly contact the gNB-DU and request certain SIBs to be broadcasted. After receiving the request and assuming that the gNB-DU already has the information available, such as because it has received it from the gNB-CU beforehand via any of the F1 methods, it is able to broadcast it accordingly without gNB-CU intervention. If the SIB requested is not available at the gNB-DU, the gNB-DU will have to request it from the gNB-CU prior to broadcasting it.

The present disclosure tackles this issue. The method is the same as with the previous scenario, since the method to indicate and allow the gNB-DU to autonomously generate and broadcast a certain SIB is also applicable. If the gNB-DU received a request for a SIB it had not received, however, it is able to generate it by itself, it can do so and broadcast it without need to interact with the gNB-CU.

### 2. Dedicated (RRC) Signaling (that is, unicast (RRC) signaling)

The SI delivery via dedicated signaling is currently mainly used for two purposes: to provide SIB 1 during handover; and to provide updated SIB1 and/or ETWS/CMAS notifications (SIB6, SIB7 and SIB8) to specific UEs in RRC CONNECTED state that are utilizing a Bandwidth Part (BWP) which does not support broadcast, such as by having no Common Search Space (CSS) configured. That is, the UEs utilizing that BWP are unable to receive any SIBs via the default broadcast mechanism. In this case, the gNB-DU provides a list of UEs, which cannot receive the broadcast, to the gNB-CU. Then, the gNB-CU provides the SIBs to each UE separately.

A general issue with the existing mechanism is that the information provided by the gNB to different UEs within SIB will comprise exactly the same information. Further, if the information is generated at the gNB-CU, as with any of the Other-SI, it may not be optimal. One such case is SIB9, although this could apply to other SIBs in the future, in which the time-reference information that the gNB-DU can generate is more accurate and reliable. Therefore, it is preferable to use the information that the gNB-DU can generate.

The present disclosure tackles this issue by introducing a mechanism that extends the method described for broadcast scenarios above. Given that the gNB-CU has already become aware that the gNB-DU can generate certain information used in Other-SI, it can request such information rather than generating it by itself. Further, depending on the information, it should be possible for the gNB-CU to request an encoded SIB, or just some of its contents to be delivered as IEs. This is useful as some information may be the same for multiple UEs, or possibly applicable to multiple SIBs. In such case, it will be beneficial to have the flexibility at the gNB-CU to decide whether to encode the SIB itself using "assistance" information from the gNB-DU, or request an already encoded SIB from the gNB-DU, which could be transmitted without any changes. Providing assistance information enables the CU to prepare the unicast signaling to UEs, without increasing the signaling overhead over F1. The CU receiving an already encoded SIB could imply that the F1 procedure has to be executed per UE. The use of some of the not encoded contents of system information for some other purpose, such as coordination between the gNB-CUs or sharing the information with core network, is also envisioned.

Changes required in F1 interface are new IEs to indicate the information that the gNB-CU is requesting the gNB-DU to generate. For this purpose, both reuse of the CU configuration update procedure, as well as introduction of a new procedure for this purpose, are both viable choices.

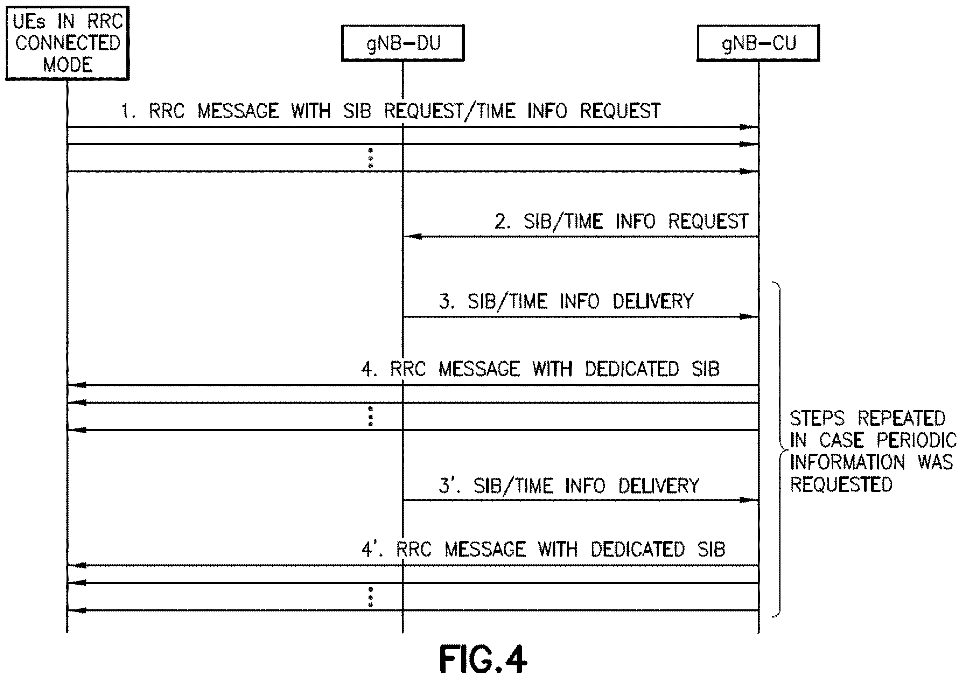

Embodiments of this proposal are presented in Figure 4.

In step 1, one or multiple UEs request the gNB-CU to provide a certain SIB or time-reference information via unicast RRC signaling. The request may be implemented either via RRC System Info Request message or a new "Time reference info request" message. The request may additionally indicate whether the UE is interested in receiving the information periodically or just "one-time".

Once the request is received from at least one UE, the gNB-CU decides that the requested information should originate from the gNB-DU. In step 2, it sends the SIB/Time Info request to the gNB-DU indicating whether it wants to receive the information one time or periodically.

In step 3, the gNB-DU responds with the requested information to the gNB-CU. Note that since unicast RRC messages are encoded by the gNB-CU, the gNB-DU cannot send the information directly to the UE.

In step 4, the requested information is provided with a dedicated RRC signaling to the UEs which requested the information, such as via an RRC Reconfiguration message containing dedicated SIB IE or via a DL Information Transfer message.

In case the information which was requested by the UE is needed on a periodic basis, which can be determined either by an explicit indication from the UE or by the nature of the request, for example, time-reference information may be assumed to be always needed to be updated on a periodic basis, then steps 3 and 4 are repeated periodically, as represented by steps 3' and 4' in Figure 4.

It should be also noted that step 1 in Figure 4 is not supported by the current specifications. 3GPP specifications allow requesting an SIB, but only in case gNB indicates in SIB1 that a certain SIB or SI message is available but currently is in a "not broadcasting" state. Based on that indication and on an additional configuration, a UE in an RRC IDLE or RRC INACTIVE state may request a certain SIB or SI message to be provided using one of the two methods:
- via a Msg1-based mechanism where a UE sends a configured physical random access channel (PRACH) preamble to indicate the SI message it would like to receive.
- via Msg3 (RRCSystemInfoRequest) where UE may indicate particular SIBs, which it would like to receive.

Hence, there are two additional issues with the current on-demand SI delivery mechanism:
- On-demand SI may only be requested by the UE in case it is in an RRC IDLE or an RRC INACTIVE state. This is an issue especially for SIB9, which, if not configured to be always broadcast, cannot be requested by the UEs requiring it, for example, Industrial Intemet-of-Things (IoT) UEs.
- Once requested, the SI is delivered by the gNB using broadcast signaling. Hence, it cannot be received by the RRC CONNECTED UEs in BWPs with no CSS configured.

It is proposed to handle this issue by introducing the following new UE and network behavior for on-demand SI request mechanism, and thus making step 1 of the procedure in Figure 4 possible: Allowing the UE to send a msg3-based SIB delivery request to a network in two new cases:
- If the UE is in an RRC CONNECTED state and the SIB it is interested to receive has status "not broadcasting" in SIB1:
   ▪ Msg3-based request can be sent by the UE regardless of whether the network has configured msg1-based OSI mechanism. Currently, the UE cannot use msg3-based mechanism in case msg1-based mechanism is configured by the network, but for RRC CONNECTED UEs, msg1-based OSI request is not appropriate.
   ▪ Network may also provide additional indication that an msg3-based OSI is supported/allowed by the RRC CONNECTED UEs.
- If the UE is in an RRC CONNECTED state in a BWP where no CSS is configured, regardless of whether the concerned SIB has "broadcasting" or "not broadcasting" status set, as the UE is anyway unable to receive it via broadcast.

Once such request is received by the network from a UE in an RRC CONNECTED state, the network delivers it via dedicated RRC signaling instead of broadcasting it, as is done at the moment for on-demand SI.

### IE Changes:

A high-level view of possible changes in IE definitions (IE names are just indicative) is as follows:
- New IE that indicates the Other-SI related information that gNB-DU is able to generate. • For example: gNB-DU Other-SI capability (ENUMERATED (time reference info, SIB9, ...))
- New IE that indicates that gNB-CU will no longer provide updates on certain SIBs belonging to Other-SI towards the gNB-DU.
   - gNB-CU Other-SI updates disabled (ENUMERATED(None disabled, SIB9,...))
- New IE that indicates the Other-SI related information that the gNB-CU wants to retrieve from gNB-DU. The request is limited to capabilities indicated by gNB-DU.
   - gNB-DU Other-SI requested (ENUMERATED(time reference info, SIB9, ...))
- New IE to provide the Other-SI related information that gNB-DU has generated. Contents may include fully encoded SIB as well as some other information provided explicitly.
   - gNB-DU Other-SI related information
      >SI Type List <0..max no of Other-SI generated at gNB-DU>
      >>SIB
      >Time reference information
      >...

### Procedure Changes:

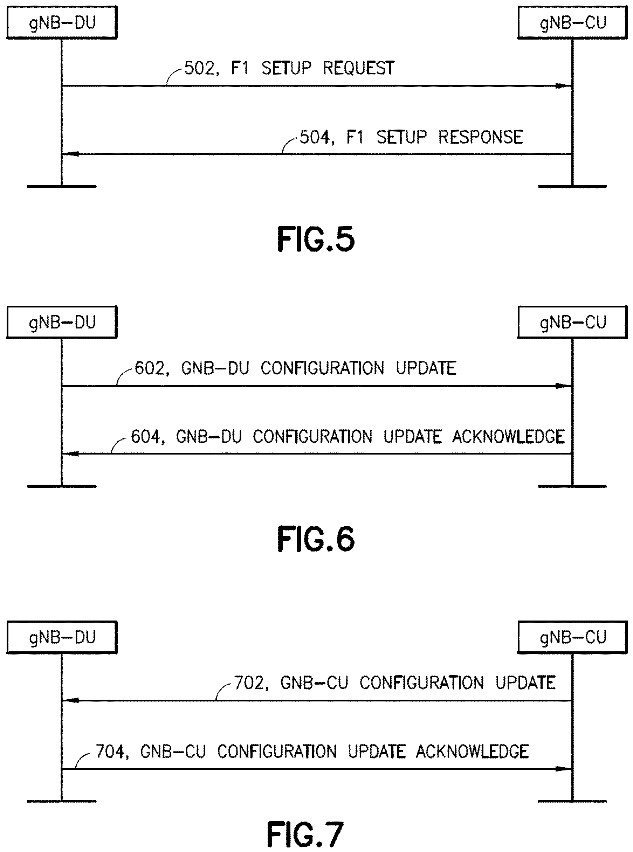

A high level-view of the changes in procedures includes:
1. F1 SETUP Procedure, as illustrated in Figure 5:
   - F1 SETUP REQUEST 502
      - Includes *gNB-DU Other SI capability* IE
   - F1 SETUP REQUEST RESPONSE 504
      - Includes *Other-SI updates disabled* IE
2. GNB-DU Configuration Update Procedure, as illustrated in Figure 6:
   - GNB-DU CONFIGURATION UPDATE 602
      - Includes *gNB-DU Other SI capability* IE
      - (*) In case no new procedure is introduced, includes *gNB-DU Other-SI related information* IE
   - GNB-DU CONFIGURATION UPDATE ACKNOWLEDGE 604
      - Includes *Other-SI updates disabled* IE
3. GNB-CU CONFIGURATION UPDATE Procedure, as illustrated in Figure 7:
   - GNB-CU CONFIGURATION UPDATE 702
      - Includes *Other-SI updates disabled* IE
      - (*) In case no new procedure is introduced, includes *gNB-DU Other-SI requested* IE
   - GNB-CU CONFIGURATION UPDATE ACKNOWLEDGE 704
      - (*) In case no new procedure is introduced, includes *gNB-DU Other-SI related information* IE
4. (NEW) OTHER-SI REQUEST Procedure:
   - (*) New procedure: OTHER-SI REQUEST
      - Option 1: Introduce it as a Class 2 procedure
         ▪ OTHER-SI REQUEST
            - Includes *gNB-DU Other-SI requested* IE
         ▪ (existing procedure) GNB-DU CONFIGURATION UPDATE
            - Includes *gNB-DU Other-SI related information* IE
      - Option 2: Introduce it as a Class 1 procedure
         ▪ OTHER-SI REQUEST
            - Includes *gNB-DU Other-SI requested* IE
         ▪ OTHER-SI REQUEST RESPONSE
            - Includes *gNB-DU Other-SI related information* IE

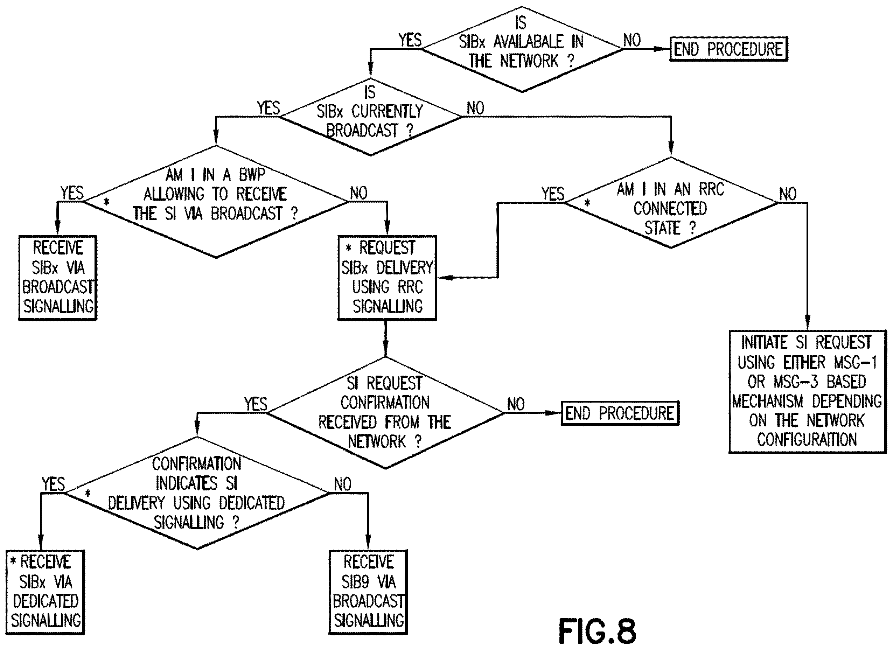

An example of the new procedure for SI request for SIB9 by a UE in RRC CONNECTED state is presented in Figure 8. New steps are marked with an asterisk (*).

The procedure may result in SI request being sent by the UE which is either able to receive the SI via broadcast (that is, it is in an RRC CONNECTED state, but in the BWP supporting broadcast SI delivery) or which is only able to receive the requested SIB via dedicated RRC signaling, that is, it is in a BWP not supporting SI delivery. In the first case, the network has a choice to either provide the SI via broadcast or unicast depending on its preferences (for example, depending on whether more than a single UE requested a certain SIB). In the second case, there is no choice and the delivery should be via RRC-dedicated signaling. To make the UE aware of which method has been chosen, the gNB could indicate this in the confirmation message (at the moment, UE always initiates broadcast SI delivery when receiving a confirmation). Alternatively, the gNB may not send the confirmation, but deliver the message with a requested SIB right away or at its earliest possibility.

The above procedure and IE changes will provide the following benefits:
- Reducing, or even completely eliminating, wasteful and unnecessary signaling between the gNB-CU and the gNB-DU in broadcast (multicast) cases. This is possible since the gNB-CU and the gNB-DU have exchanged capabilities and agreed on the node that will deliver the system information, and thus frequent updates are no longer required. Further, it removes the need at the gNB-DU to unnecessarily decode and re-encode information that it can generate on its own.
- The gNB-CU will provide more accurate/reliable System Information via dedicated signaling (unicast). This is possible since gNB-CU has become aware of the gNB-DU capabilities, and thus can decide whether to request the information from the gNB-DU rather than generate it by itself.
- The gNB-CU is able to compile a single source of information and reuse it for multiple UEs rather than generate it individually. This is possible given that some information (such as time-reference information) is not specific to any UE. Therefore, a single instance of this information provided by gNB-DU can be reused in multiple messages or SIBs, and there is no need to request it on a per UE basis.
- The solution is backward compatible with Release 15 versions of the specification.
- Dedicated SIB delivery request or time-reference information delivery is made possible for UEs in an RRC CONNECTED state when the required information is currently not broadcast or when the UEs operate in BWPs where broadcast information delivery is not supported (such as a BWP with no CSS configured).

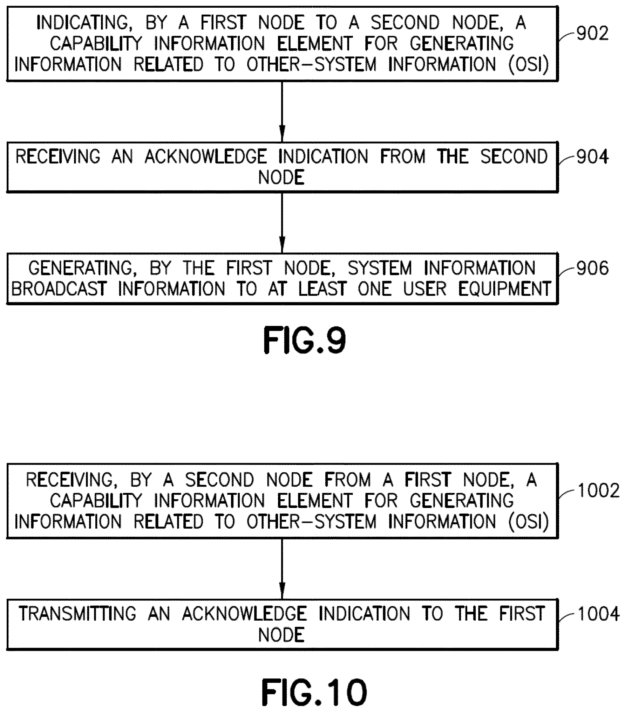

Figure 9 is a flow chart illustrating a method performed by a gNB-DU in accordance with the present disclosure. In block 902, the gNB-DU indicates, to a second node, a capability information element for generating information related to Other-System Information (OSI). In block 904, the gNB-DU receives an acknowledge indication from the second node. And, in block 906, the gNB-DU generates system information broadcast information to at least one user equipment.

Figure 10 is a flow chart illustrating a method performed by a gNB-CU in accordance with the present disclosure. In block 1002, the gNB-CU receives, from a first node, a capability information element for generating information related to Other-System Information (OSI). And, in block 1004, the gNB-CU transmits an acknowledge indication to the first node.

In general, the various exemplary embodiments may be implemented in hardware or special purpose circuits, software, logic or any combination thereof. For example, some aspects may be implemented in hardware, while other aspects may be implemented in firmware or software, which may be executed by a controller, microprocessor or other computing device, although the invention is not limited thereto.

While various aspects of the exemplary embodiments of this invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

It should thus be appreciated that at least some aspects of the exemplary embodiments of the inventions may be practiced in various components, such as integrated circuit chips and modules, and that the exemplary embodiments of this invention may be realized in an apparatus that is embodied as an integrated circuit. The integrated circuit, or circuits, may comprise circuitry, as well as possibly firmware, for embodying at least one or more of a data processor or data processors, a digital signal processor or processors, baseband circuitry and radio frequency circuitry that are configurable so as to operate in accordance with the exemplary embodiments of this invention.

Various modifications and adaptations to the foregoing exemplary embodiments of this invention may become apparent to those skilled in the relevant arts in view of the foregoing description, when read in conjunction with the accompanying drawings. For example, while the exemplary embodiments have been described above in the context of advancements to the 5G NR system, it should be appreciated that the exemplary embodiments of this invention are not limited for use with only this one particular type of wireless communication system. The exemplary embodiments of the invention presented herein are explanatory and not exhaustive or otherwise limiting of the scope of the invention.

The following abbreviations have been used in the preceding discussion:
- BWP: Bandwidth Part
- CSS: Common Search Space
- CU: Centralized Unit
- DL: Downlink
- DU: Distributed Unit
- GHz: Gigahertz
- gNB: gNodeB (5G Base Station)
- gNB-CU: gNB Centralized Unit
- gNB-DU: gNB Distributed Unit
- IE: Information Element
- IIoT: Industrial Internet of Things
- IoT: Internet of Things
- MIB: Master Information Block
- Msg1: Message 1
- Msg3: Message 3
- NPN: Non-Public Network
- NR: New Radio (5G)
- OSI: Other System Information
- PRACH: Physical Random Access Channel
- RF: Radio Frequency
- RRC: Radio Resource Control
- RRH: Remote Radio Head
- Rx: Receiver
- SI: System Information
- SIB: System Information Broadcast
- SS: Synchronization Signal
- Tx: Transmitter
- UE: User Equipment
- UL: Uplink
- WI: Work Item
- 3GPP: 3^{rd} Generation Partnership Project
- 5G: 5^{th} Generation

The terminology used herein is for the purpose of describing particular embodiments only and is not intended to be limiting of the invention. As used herein, the singular forms "a", "an", and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof.

The description of the present invention has been presented for purposes of illustration and description, but is not intended to be exhaustive or limited to the invention in the form disclosed. Many modifications and variations will be apparent to those of ordinary skill in the art. The embodiment was chosen and described in order to best explain the principles of the invention and the practical application, and to enable others of ordinary skill in the art to understand the invention for various embodiments with various modifications as are suited to the particular use contemplated.

Various modifications and adaptations may become apparent to those skilled in the relevant arts in view of the foregoing description, when read in conjunction with the accompanying drawings. However, any and all modifications of the teachings of this disclosure will still fall within the scope of the non-limiting embodiments of this invention.

Although described in the context of particular embodiments, it will be apparent to those skilled in the art that a number of modifications and various changes to these teachings may occur. Thus, while the invention has been particularly shown and described with respect to one or more embodiments thereof, it will be understood by those skilled in the art that certain modifications or changes may be made therein without departing from the scope of the invention as defined by the appended set of claims.

## Claims

1. A gNodeB centralized unit comprising:
means for receiving, from a gNodeB distributed unit, information indicating the gNodeB distributed unit's capability for generating other-system information, wherein the other-system information comprises system information other than master information block and system information block 1 information;
means for transmitting, to the gNodeB distributed unit, a request for the other-system information, wherein the other-system information comprises time reference information generated by the gNodeB distributed unit;
means for receiving a delivery of the other-system information from the gNodeB distributed unit; and
means for generating system information broadcast information to be sent via dedicated signaling to at least one user equipment based at least in part on the other-system information.

2. The gNodeB centralized unit as claimed in claim 1, wherein the system information broadcast information comprises System Information Broadcast 9.

3. The gNodeB centralized unit as claimed in any of claims 1-2, wherein the other-system information is received over an F1 interface through at least one of:
an F1 setup procedure;
a distributed unit configuration update procedure;
a centralized unit configuration update procedure; and
an Other-System Information request procedure.

4. The gNodeB centralized unit as claimed in any of claims 1-3, further comprising:
means for transmitting, to the gNodeB distributed unit, a request for the system information broadcast information.

5. The gNodeB centralized unit as claimed in claim 4, wherein the request comprises request for an encoded System Information or at least part of contents of a System Information.

6. The gNodeB centralized unit as claimed in claim 4, further comprising:
means for receiving, from the gNodeB distributed unit, assistance information regarding the system information broadcast information.

7. The gNodeB centralized unit as claimed in any of claims 1-6, further comprising:
means for receiving a request from at least one user equipment for system information broadcast information via unicast radio resource control signaling.

8. The gNodeB centralized unit as claimed in claim 7, wherein the at least one user equipment is in an Radio Resource Control CONNECTED state and the system information broadcast requested has status "not broadcasting" in System Information Broadcast 1, or wherein the at least one user equipment is in Radio Resource Control CONNECTED state in a Bandwidth Part where no common search space is configured.

9. A gNodeB distributed unit comprising:
means for transmitting, to a gNodeB centralized unit, information indicating the gNodeB distributed unit's capability for generating other-system information, wherein the other-system information comprises system information other than master information block and system information block 1 information;
means for receiving, from a gNodeB centralized unit, a request for the other-system information, wherein the other-system information comprises time reference information generated by the gNodeB distributed unit; and
means for transmitting a delivery of other-system information to the gNodeB centralized unit.

10. The gNodeB distributed unit as claimed in claim 9, wherein the other-system information is transmitted over an F1 interface through at least one of:
an F1 setup procedure;
a Distributed Unit configuration update procedure;
a Centralized Unit configuration update procedure; and
an Other-System Information request procedure.

11. The gNodeB distributed unit as claimed in any of claims 9-10, further comprising:
means for receiving, from the gNodeB centralized unit, a request for system information broadcast information.

12. The gNodeB distributed unit as claimed in claim 11, wherein the request comprises request for an encoded System Information or at least part of contents of a System Information.

13. The gNodeB distributed unit as claimed in claim 11, wherein the system information broadcast information comprises System Information Broadcast 9.

14. The gNodeB distributed unit as claimed in claim 11, further comprising:
means for transmitting, to the gNodeB centralized unit, assistance information regarding the system information broadcast information.

15. The gNodeB distributed unit as claimed in claim 14, wherein the assistance information comprises an encoded System Information, or at least part of contents of a System Information.

## Patentansprüche

1. Zentralisierte gNodeB-Einheit, die Folgendes umfasst:
Mittel zum Empfangen von Informationen, die die Fähigkeit zum Erzeugen von Informationen eines anderen Systems von einer verteilten gNodeB-Einheit anzeigen, von der verteilten gNodeB-Einheit, wobei die Informationen des anderen Systems andere Systeminformationen als Informationen eines Masterinformationsblocks und eines Systeminformationsblocks 1 umfassen;
Mittel zum Übertragen einer Anforderung der Informationen eines anderen Systems zur verteilten gNodeB-Einheit, wobei die Informationen des anderen Systems Zeitreferenzinformationen umfassen, die von der verteilten gNodeB-Einheit erzeugt wurden;
Mittel zum Empfangen einer Bereitstellung der Informationen des anderen Systems von der verteilten gNodeB-Einheit; und
Mittel zum Erzeugen von Systeminformationsbroadcastinformationen, die via eine dedizierte Signalisierung an mindestens eine Teilnehmereinrichtung mindestens teilweise auf Basis der Informationen des anderen Systems zu senden sind.

2. Zentralisierte gNodeB-Einheit nach Anspruch 1, wobei die Systeminformationsbroadcastinformationen ein Systeminformationsbrodcast 9 umfassen.

3. Zentralisierte gNodeB-Einheit nach einem der Ansprüche 1 bis 2, wobei die Informationen des anderen Systems über eine F1-Schnittstelle durch mindestens eines von Folgendem empfangen werden:
einer F1-Einrichtungsprozedur;
einer Aktualisierungsprozedur für eine Auslegung der verteilten Einheit;
einer Aktualisierungsprozedur für eine Auslegung der zentralisierten Einheit; und
einer Anforderungsprozedur für Informationen des anderen Systems.

4. Zentralisierte gNodeB-Einheit nach einem der Ansprüche 1 bis 3, die ferner Folgendes umfasst:
Mittel zum Übertragen einer Anforderung von Systeminformationsbroadcastinformationen zu einer verteilten gNodeB-Einheit.

5. Zentralisierte gNodeB-Einheit nach Anspruch 4, wobei die Anforderung eine Anforderung von codierten Systeminformationen oder mindestens eines Teils eines Inhalts von Systeminformationen umfasst.

6. Zentralisierte gNodeB-Einheit nach Anspruch 4, die ferner Folgendes umfasst:
Mittel zum Empfangen von Unterstützungsinformationen mit Bezug auf die Systeminformationsbroadcastinformationen von der verteilten gNodeB-Einheit.

7. Zentralisierte gNodeB-Einheit nach einem der Ansprüche 1 bis 6, die ferner Folgendes umfasst:
Mittel zum Empfangen einer Anforderung von mindestens einer Teilnehmereinrichtung für Systeminformationsbroadcastinformationen via eine Unicastfunkressourcensteuersignalisierung.

8. Zentralisierte gNodeB-Einheit nach Anspruch 7, wobei sich die mindestens eine Teilnehmereinrichtung in einem FunkressourcensteuerungsVERBINDUNGSzustand befindet und das angeforderte Systeminformationsbroadcast einen Status "kein Broadcasting" im Systeminformationsbroadcast 1 aufweist, oder wobei sich die mindestens eine Teilnehmereinrichtung im FunkressourcensteuerungsVERBINDUNGSzustand in einem Bandbreitenteil befindet, in dem kein Suchraum ausgelegt ist.

9. Verteilte gNodeB-Einheit, die Folgendes umfasst:
Mittel zum Übertragen von Informationen, die die Fähigkeit zum Erzeugen von Informationen eines anderen Systems von einer verteilten gNodeB-Einheit anzeigen, zu einer zentralisierten gNodeB-Einheit, wobei die Informationen des anderen Systems andere Systeminformationen als Informationen eines Masterinformationsblocks und eines Systeminformationsblocks 1 umfassen;
Mittel zum Empfangen einer Anforderung der Informationen des anderen Systems von einer zentralisierten gNodeB-Einheit, wobei die Informationen des anderen Systems Zeitreferenzinformationen umfassen, die von der verteilten gNodeB-Einheit erzeugt wurden; und
Mittel zum Übertragen einer Bereitstellung von Informationen eines anderen Systems zur zentralisierten gNodeB-Einheit.

10. Verteilte gNodeB-Einheit nach Anspruch 9, wobei die Informationen des anderen Systems über eine F1-Schnittstelle durch mindestens eines von Folgendem übertragen werden:
einer F1-Einrichtungsprozedur;
einer Aktualisierungsprozedur für eine Auslegung der verteilten Einheit;
einer Aktualisierungsprozedur für eine Auslegung der zentralisierten Einheit; und
einer Anforderungsprozedur für Informationen des anderen Systems.

11. Verteilte gNodeB-Einheit nach einem der Ansprüche 9 bis 10, die ferner Folgendes umfasst:
Mittel zum Empfangen einer Anforderung von Systeminformationsbroadcastinformationen von der zentralisierten gNodeB-Einheit.

12. Verteilte gNodeB-Einheit nach Anspruch 11, wobei die Anforderung eine Anforderung von codierten Systeminformationen oder mindestens eines Teils eines Inhalts von Systeminformationen umfasst.

13. Verteilte gNodeB-Einheit nach Anspruch 11, wobei die Systeminformationsbroadcastinformationen ein Systeminformationsbrodcast 9 umfassen.

14. Verteilte gNodeB-Einheit nach Anspruch 11, die ferner Folgendes umfasst:
Mittel zum Übertragen von Unterstützungsinformationen mit Bezug auf die Systeminformationsbroadcastinformationen zur zentralisierten gNodeB-Einheit.

15. Verteilte gNodeB-Einheit nach Anspruch 14, wobei die Unterstützungsinformationen codierte Systeminformationen oder mindestens eines Teils eines Inhalts von Systeminformationen umfassen.

## Revendications

1. Unité centralisée gNodeB comprenant :
des moyens pour recevoir, d'une unité distribuée gNodeB, des informations indiquant la capacité de l'unité distribuée gNodeB à générer des informations d'autre système, dans laquelle les informations d'autre système comprennent des informations système autres que des informations de bloc d'informations maître et de bloc d'informations système 1 ;
des moyens pour transmettre, à l'unité distribuée gNodeB, une demande des informations d'autre système, dans laquelle les informations d'autre système comprennent des informations de référence temporelle générées par l'unité distribuée gNodeB ;
des moyens pour recevoir une distribution des informations d'autre système de l'unité distribuée gNodeB ; et
des moyens pour générer des informations de diffusion d'informations système à envoyer via une signalisation dédiée à au moins un équipement utilisateur sur la base au moins en partie des informations d'autre système.

2. Unité centralisée gNodeB selon la revendication 1, dans laquelle les informations de diffusion d'informations système comprennent une diffusion d'informations système **9.**

3. Unité centralisée gNodeB selon l'une des revendications 1 et 2, dans laquelle les informations d'autre système sont reçues sur une interface F1 par au moins l'une des procédures suivantes :
une procédure de paramétrage F1 ;
une procédure de mise à jour de configuration d'unité distribuée ;
une procédure de mise à jour de configuration d'unité centralisée ; et
une procédure de demande d'informations d'autre système.

4. Unité centralisée gNodeB selon l'une des revendications 1 à 3, comprenant en outre :
des moyens pour transmettre, à l'unité distribuée gNodeB, une demande des informations de diffusion d'informations système.

5. Unité centralisée gNodeB selon la revendication 4, dans laquelle la demande comprend une demande d'informations système codées ou au moins une partie d'un contenu d'informations système.

6. Unité centralisée gNodeB selon la revendication 4, comprenant en outre :
des moyens pour recevoir, de l'unité distribuée gNodeB, des informations d'assistance concernant les informations de diffusion d'informations système.

7. Unité centralisée gNodeB selon l'une des revendications 1 à 6, comprenant en outre :
des moyens pour recevoir une demande d'au moins un équipement utilisateur des informations de diffusion d'informations système via une signalisation de contrôle de ressources radio en monodiffusion.

8. Unité centralisée gNodeB selon la revendication 7, dans laquelle l'au moins un équipement utilisateur est dans un état de contrôle de ressources CONNECTÉ, et la diffusion d'informations système demandée a un statut « pas de diffusion » dans une diffusion d'informations système 1, ou dans laquelle l'au moins un équipement utilisateur est dans un état de contrôle de ressources CONNECTÉ dans une partie de bande passante où aucun espace de recherche commun n'est configuré.

9. Unité distribuée gNodeB comprenant :
des moyens pour transmettre, à une unité centralisée gNodeB, des informations indiquant la capacité de l'unité distribuée gNodeB à générer des informations d'autre système, dans laquelle les informations d'autre système comprennent des informations système autres que des informations de bloc d'informations maître et de bloc d'informations système 1 ;
des moyens pour recevoir, d'une unité centralisée gNodeB, une demande des informations d'autre système, dans laquelle les informations d'autre système comprennent des informations de référence temporelle générées par l'unité distribuée gNodeB ; et
des moyens pour transmettre une distribution d'informations d'autre système à l'unité centralisée gNodeB.

10. Unité distribuée gNodeB selon la revendication 9, dans laquelle les informations d'autre système sont transmises sur une interface F1 par au moins l'une des procédures suivantes :
une procédure de paramétrage F1 ;
une procédure de mise à jour de configuration d'unité distribuée ;
une procédure de mise à jour de configuration d'unité centralisée ; et
une procédure de demande d'informations d'autre système.

11. Unité distribuée gNodeB selon l'une des revendications 9 et 10, comprenant en outre :
des moyens pour recevoir, de l'unité centralisée gNodeB, une demande des informations de diffusion d'informations système.

12. Unité distribuée gNodeB selon la revendication 11, dans laquelle la demande comprend une demande d'informations système codées ou au moins une partie d'un contenu d'informations système.

13. Unité distribuée gNodeB selon la revendication 11, dans laquelle les informations de diffusion d'informations système comprennent une diffusion d'informations système **9.**

14. Unité distribuée gNodeB selon la revendication 11, comprenant en outre :
des moyens pour transmettre, à l'unité centralisée gNodeB, des informations d'assistance concernant les informations de diffusion d'informations système.

15. Unité distribuée gNodeB selon la revendication 14, dans laquelle les informations d'assistance comprennent des informations système codées ou au moins une partie d'un contenu d'informations système.
